# FASCICULE DE BREVET EUROPEEN

(11) **EP 3 411 316 B1**
(45) Date de publication et mention de la délivrance du brevet: **18.05.2022**
(21) Numéro de dépôt: 17702415.5
(22) Date de dépôt: 03.02.2017
(51) Int. Cl.: B65G 39/02, B65G 13/10, B65G 13/071

(54) **DISPOSITIF ET PROCÉDÉ DE DÉVIATION D'ARTICLES À TRIER, ET INSTALLATION DE TRI COMPRENANT UN TEL DISPOSITIF**
VORRICHTUNG UND VERFAHREN ZUM ABLENKEN VON GEGENSTÄNDEN ZUM SORTIEREN UND SORTIERANLAGE MIT SOLCH EINER VORRICHTUNG
DEVICE AND METHOD FOR DIVERTING ITEMS THAT ARE TO BE SORTED, AND SORTING INSTALLATION COMPRISING SUCH A DEVICE

(30) Priorité: 04.02.2016 FR 1650904
(43) Date de publication de la demande: 12.12.2018
(73) Titulaire: Fives Intralogistics SAS, 38670 Chasse-sur-Rhône (FR)
(72) Inventeur: MARULAZ, Sylvain, 69520 Grigny (FR); ZAK, David, 69520 Grigny (FR)
(74) Mandataire: Novagraaf Group
(86) Numéro de dépôt international: PCT/EP2017/052468
(87) Numéro de publication internationale: WO 2017/134278

(56) Documents cités:
- EP-A1- 0 276 881
- EP-A1- 3 178 759
- GB-A- 2 172 558
- JP-A- H06 298 320
- JP-U- H0 526 921
- US-A- 5 921 374

## Description

L'invention est relative au domaine des installations de tri d'articles, plus particulièrement des convoyeurs motorisés permettant de dévier les articles par rapport à sens de déplacement général.

Dans les installations de tri d'articles, par exemple des colis ou des paquets, différents types de convoyeurs permettent d'acheminer les articles d'un ou plusieurs points d'entrée vers une ou plusieurs destinations. Ces convoyeurs peuvent avoir une fonction uniquement de transport ou de déviation des articles vers les possibles voies de transport ou destinations. Ces derniers utilisent des différents mécanismes pour aboutir à une déviation d'un article ou d'un flux d'articles.

Le document EP0276881A1 divulgue un dispositif de déviation d'articles selon le préambule de la revendication 1.

Le document EP3178759A1 divulgue aussi un dispositif de déviation d'articles mais le document ne divulgue pas de plan support définissant une pluralité d'ouvertures. Il est à noter que ce document est un document intermédiaire au sens de l'Article 54(3) CBE.

On connaît aussi des convoyeurs dans lesquels alternent des rouleaux acheminant les articles dans le sens de déplacement général et des courroies entraînées transversalement par rapport au sens de déplacement général. Les supports des courroies sont montés mobiles dans le sens vertical pour sélectivement venir au contact des articles. En position haute, les courroies agrippent les articles et les dévient de leur trajectoire initiale. Cet exemple de convoyeur ne peut dévier les articles que dans une direction perpendiculaire au sens général de transit de l'installation de tri, ce qui limite les architectures possibles des installations de tri.

La présente invention vise donc à pallier l'inconvénient précité, en proposant notamment un dispositif de déviation augmentant le nombre de possibilités de déviation des articles.

A cet effet, l'invention a pour objet un dispositif de déviation d'articles par rapport à un sens de déplacement général des articles comprenant :
- un plan support définissant une pluralité d'ouvertures,
- une pluralité de billes de déviation, chaque bille de déviation étant disposée dans l'une des ouvertures et montée rotative par rapport au plan support autour d'un axe de rotation,
- au moins un rouleau disposé sous le plan support pour entraîner les billes de déviation, le rouleau s'étendant selon une direction transversale sensiblement parallèle au plan support et sensiblement perpendiculaire au sens de déplacement général des articles, et
- une pluralité d'actionneurs, chaque actionneur étant adapté pour déplacer sélectivement l'axe de rotation d'une des billes de déviation en rotation autour d'un axe de direction par rapport au plan support entre une pluralité de positions,
l'axe de direction passant par le centre de la bille de déviation et formant un angle aigu avec l'axe de rotation, l'axe de rotation et l'axe de direction définissant un plan formant un angle d'inclinaison avec une direction normale au plan support, la pluralité de positions de l'axe de rotation définissant une pluralité de valeurs possibles pour l'angle d'inclinaison.

Dans une mise en œuvre de l'invention, le dispositif de déviation met en œuvre des billes entraînées en rotation sur leur axe par des rouleaux d'entraînement pour acheminer les articles passant sur ces billes. Les billes sont montées libres sur leur axes et l'orientation desdits axes permet de gouverner la direction des articles passant sur ces billes. Ce dispositif de déviation est installé dans des installations de tri d'articles au niveau des intersections vers d'autres voies de transit ou vers des sorties.

Le dispositif de déviation selon l'invention permet d'atteindre des cadences élevées de déviation d'articles en raison d'une part par un changement de direction très rapide contrairement au système monte/baisse d'un transfert d'article, et d'autre part par un pilotage des rangées de billes avec un léger décalage permettant d'avoir des articles très proches les uns des autres sur le convoyeur.

Suivant certains modes de réalisation, le dispositif comprend en outre une ou plusieurs des caractéristiques suivantes, prise(s) isolément ou suivant toutes les combinaisons techniquement possibles :
- chaque actionneur comporte un arbre de rotation s'étendant selon l'axe de rotation, chaque bille de déviation étant montée rotative respectivement autour de l'un des arbres de rotation par rapport au plan support ;
- chaque organe actionneur comprend une coupelle, et un arbre de direction fixé sur la coupelle, l'arbre de direction s'étendant selon l'axe de direction et étant monté rotatif par rapport au plan support autour de l'axe de direction, l'arbre de rotation dudit actionneur étant fixé sur la coupelle ;
- l'axe de direction de chaque actionneur est sensiblement parallèle au rouleau ;
- l'angle aigu est compris entre 30° et 60° inclus, et vaut de manière préférée environ 45° ;
- chaque actionneur est adapté pour que les valeurs possibles de l'angle d'inclinaison s'étendent entre +90° et -90°, l'angle d'inclinaison étant orienté autour de l'axe de direction par rapport à la direction normale ;
- l'actionneur est entraîné en rotation autour de l'axe de direction par un actionneur mécanique ou électromagnétique ; et
- les billes de déviation possèdent un coefficient de friction sur le rouleau supérieur ou égal à 0,3, et inférieur ou égal à 0,5.

L'invention a également pour objet, selon un autre aspect, une installation de tri d'articles, comprenant au moins un dispositif tel que décrit ci-dessus.

L'invention a également pour objet, selon un deuxième aspect, un procédé de déviation d'articles mettant en œuvre un dispositif de déviation d'articles tel que décrit ci-dessus, ledit procédé comprenant au moins les étapes suivantes:
- mise en rotation du rouleau autour de son axe par rapport au plan support pour entraîner billes de déviation en rotation autour de l'axe de rotation, l'une des billes de déviation supportant au moins l'un des articles, et
- rotation d'au moins l'un des actionneurs autour de l'axe de direction pour sélectionner une valeur de l'angle d'inclinaison et dévier ledit article dans un sens différent du sens de déplacement général.

Les caractéristiques et avantages de l'invention apparaîtront à la lecture de la description qui va suivre, donnée uniquement à titre d'exemple, et non limitative, en référence aux dessins annexés, sur lesquels :
- la figure 1 est une vue en perspective d'une installation de tri selon l'invention,
- la figure 2 est une vue détaillée d'une bille de déviation et d'un actionneur de l'installation représentée sur la figure 1.
- la figure 3 est une vue du dessus du dispositif de déviation de l'installation représentée sur la figure 1, les articles étant déplacés dans le sens de déplacement général (sans déviation),
- la figure 4 est une vue du dessus du dispositif de déviation représenté sur les figures 1 et 3, les articles étant déviés vers le côté gauche de l'installation par rapport au sens de déplacement général,
- la figure 5 est une vue du dessus du dispositif de déviation représenté sur les figures 1, 3 et 4, les articles étant déviés vers le côté droit de l'installation par rapport au sens de déplacement général,
- la figure 6 est une vue en perspective d'une bille de déviation de l'installation représentée sur la figure 1, la bille de déviation étant dans une position ne déviant pas les articles,
- la figure 7 est une vue en perspective de la bille de déviation représentée sur la figure 6, la bille de déviation étant dans une position déviant les articles vers la droite de l'installation par rapport au sens de déplacement général,
- la figure 8 est une vue en perspective de la bille de déviation représentée sur les figures 6 et 7, la bille de déviation étant dans une position déviant les articles vers la gauche de l'installation par rapport au sens de déplacement général,
- la figure 9 est une vue en perspective d'une variante du dispositif de déviation selon l'invention, dans laquelle deux actionneurs sont couplés pour obtenir une même orientation des arbres de rotation, et
- la figure 10 est une vue en perspective d'une autre variante du dispositif de déviation selon l'invention, dans laquelle l'actionneur comprend un moteur embarqué pour orienter l'arbre de rotation.

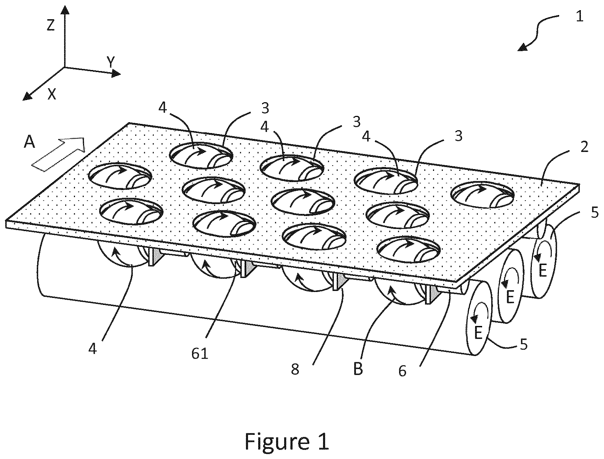

En référence à la figure 1, on décrit une installation de tri d'articles 10 (dont un seul est représenté sur la figure 1) comportant au moins un dispositif de déviation 1.

Les articles 10 sont par exemple des colis ou des paquets.

Le dispositif de déviation 1 comprend un plan support 2 définissant une pluralité d'ouvertures 3, des billes de déviation 4, des rouleaux 5 d'entraînement des billes de déviation, et des actionneurs 6.

Dans chaque ouverture 3 se trouve une bille de déviation 4 associée à un actionneur 6 maintenu par un support 8 sous le plan support 2. Les ouvertures 3 sont par exemple sensiblement circulaires et avantageusement analogues les unes aux autres.

Le plan support 2 est par exemple sensiblement horizontal. On définit un repère orthogonal X, Y, Z dans lequel Z est une direction normale au plan support 2, X est une direction parallèle au un sens de déplacement général A des articles 10 localement sur le plan support, et Y est une direction transversale sensiblement parallèle au plan support. La direction normale Z est dans l'exemple sensiblement verticale.

Les billes de déviation 4 sont avantageusement analogues les unes aux autres. Les billes de déviation 4 sont par exemple en acier adhérisé, c'est à recouvert d'un revêtement augmentant leur pouvoir de friction. Leur centre est avantageusement fixe par rapport au plan support 2. Les billes de déviation 4 dépassent sensiblement des ouvertures 3 du côté supérieur du plan support 2, de sorte que les articles 10 situés au-dessus d'une des billes de déviation 4 sont au contact avec cette bille.

Par exemple, les billes de déviation 4 dépassent au-dessus du plan support 2 d'une fraction de leur rayon comprise entre 10% et 25%. Par exemple, pour une bille 4 de déviation de diamètre entre 30 et 50 mm, celle-ci dépasse au-dessus du plan support 2 de l'ordre de 5 à 10mm.

Les billes de déviation 4 sont montées rotatives par rapport au plan support 2 autour d'un axe de rotation 70. Sur l'exemple représenté en figure 1, les billes de déviation 4 sont montées sur un arbre 7 de rotation.

Chaque bille 4 peut être rendue solidaire de l'arbre 7 de rotation de différentes manières, notamment :
- en fixant deux demi-sphères (non représentées) l'une sur l'autre, pour former les billes de déviation 4, et en emprisonnant l'arbre 7 de rotation entre les deux demi-sphères, ou
- en enfilant la bille de déviation 4 sur l'arbre 7 de rotation et en la maintenant par une vis à tête bombée ou un anneau élastique (ou circlip) en bout d'arbre 7 de rotation servant de butée à la bille de déviation 4.

Dans cet exemple de mise en œuvre de l'invention, les billes de déviation 4 forment des rangées. Chaque rangée de billes 4 est en contact avec un rouleau 5 d'entraînement disposé sous le plan support 2. Les rouleaux 5 sont par exemple perpendiculaires au sens de déplacement général A et sont entraînés en rotation autour de leur axe longitudinal 50 par un moyen d'entraînement (non visible).

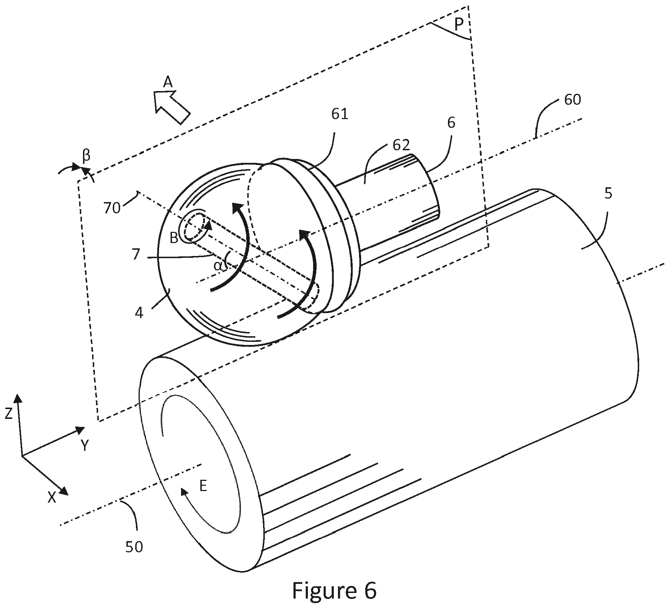

Comme visible sur la figure 6, chaque actionneur 6 est adapté pour déplacer sélectivement l'axe de rotation 70 d'une des billes de déviation 4 en rotation autour d'un axe de direction 60.

Les actionneurs 6 sont par exemple mécaniquement indépendants les uns des autres.

Selon une variante, plusieurs actionneurs 6 sont mécaniquement couplés pour obtenir une même orientation des arbres de rotation 7 correspondants, c'est-à-dire pour paralléliser les axe de rotation 70.

L'axe de direction 60 est par exemple sensiblement transversal et forme avec l'axe de rotation 70 un angle aigu α avantageusement constant.

L'angle aigu α est compris entre 30° et 60° inclus, et vaut de préférence sensiblement 45°.

L'axe de direction 60 et l'axe de rotation 70 définissent ensemble un plan P formant un angle d'inclinaison β avec la direction normal Z. L'angle d'inclinaison β est orienté autour de l'axe de direction 60.

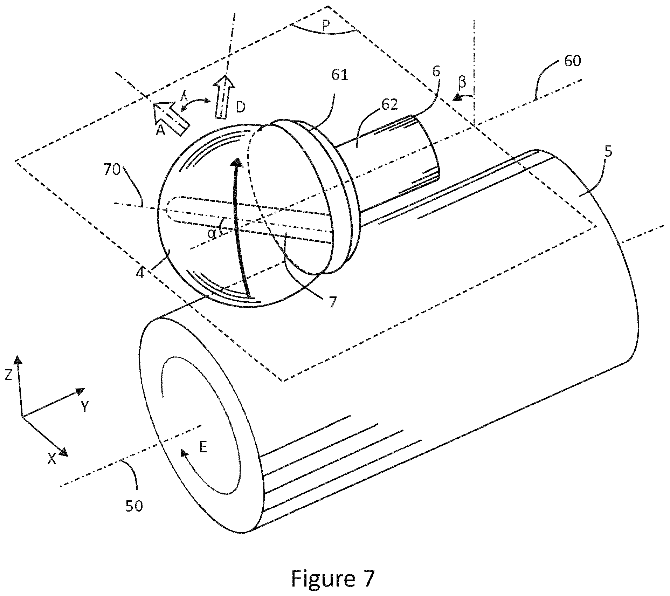

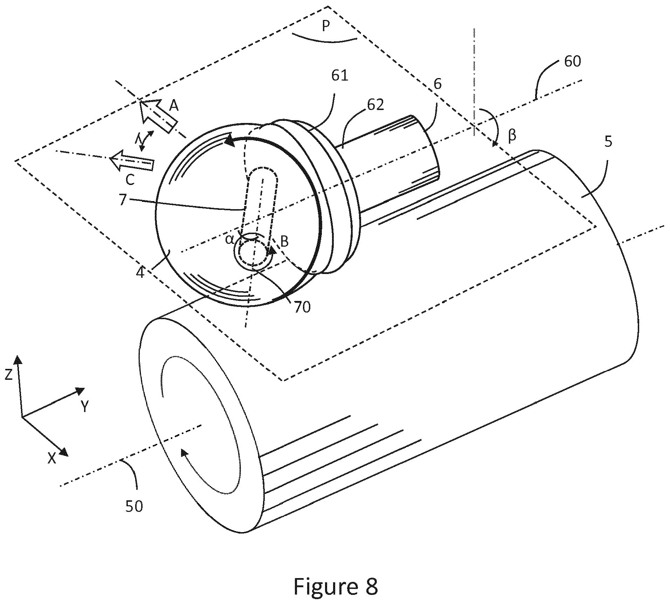

L'angle d'inclinaison β prend sélectivement des valeurs comprises dans une plage allant de -90° (figure 7) à +90° (figure 8), en passant par 0° (figure 6). L'actionneur 6 est avantageusement adapté pour toutes les valeurs entre -90° et +90° soient possibles.

Dans l'exemple représenté, le plan P est parallèle à la direction normale Z lorsque l'angle d'inclinaison β vaut 0°. Le plan P est parallèle au plan support 2 lorsque l'angle d'inclinaison β vaut -90° ou +90°.

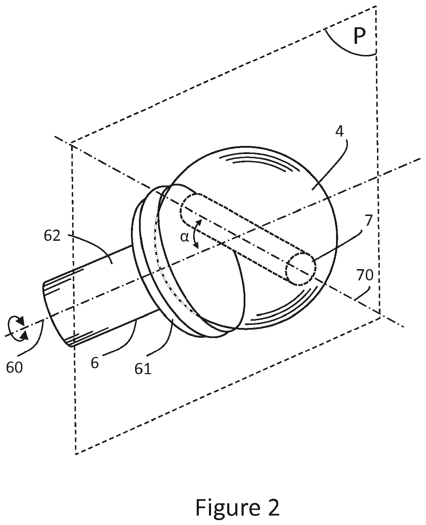

Chaque actionneur 6 comprend un arbre de rotation 7 autour duquel l'une des billes de déviation 4 est montée librement rotative par rapport au plan support 2, un arbre de direction 62, et une coupelle 61 jouant le rôle de pièce intermédiaire entre l'axe de rotation 7 et l'arbre de direction 62. Sur la figure 2, l'arbre de rotation 7 est fixé sur la coupelle 61 de sorte que l'axe de direction 60 passe par le centre de la bille de déviation 4 et croise en ce point l'axe de rotation 70 avec l'angle aigu a.

L'actionneur 6 permet d'orienter l'arbre de rotation 7 en tournant autour de l'axe de direction 60 par rapport au plan support 2. Cette rotation est réalisée par des moyens de rotation, par exemple une courroie, un mécanisme électromagnétique ou un mécanisme de crémaillère.

Avantageusement, la rotation de l'actionneur 6 fait pivoter l'arbre de rotation 7 sur 360° autour de l'axe de direction 60.

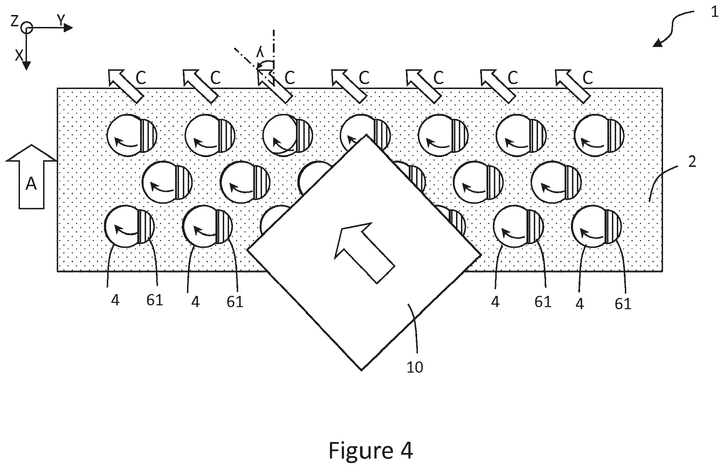

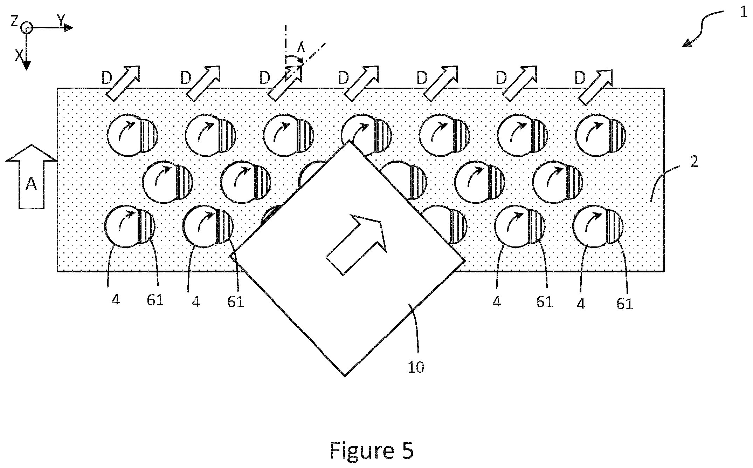

Suivant l'angle d'inclinaison β du plan P défini par la rotation de l'actionneur 6, les articles 10 sont acheminés dans un sens C, D (figures 4 et 5) formant un angle 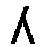 par rapport au sens de déplacement général A. Les valeurs +90° et -90° de l'angle d'inclinaison β sont privilégiés pour obtenir une déviation maximale.

Avantageusement, les articles 10 ne sont pas déviés lorsqu'ils passent sur les billes de déviation 4 ayant un angle d'inclinaison β d'environ 0° (plan P sensiblement perpendiculaire au plan support 2).

Selon un exemple de mise en œuvre de l'invention, l'arbre de rotation 7 peut prendre toutes les positions par rotation de l'actionneur 6 autour de l'axe de direction 60. Les valeurs +90° et -90° de l'angle d'inclinaison β définissent deux directions opposées de déviation des articles 10. Une multitude de positions, c'est-à-dire de valeurs de l'angle d'inclinaison β, sont utilisables pour affiner les orientations des articles 10 lors de leur déviation.

Le dispositif 1 permet d'atteindre des cadences élevées de déviation d'articles grâce au changement de direction très rapide, contrairement au système classique « monte/baisse » permettant le transfert d'un article.

Selon l'invention, l'actionneur 6 change l'angle d'inclinaison β très rapidement, ce qui entraîne un changement d'orientation de l'axe de rotation 70 des billes de déviation 4 par rapport au plan support 2 tout aussi rapide. Les articles 10 sont alors envoyés sur le dispositif 1 avec une cadence plus importante et sont traités plus rapidement par le dispositif.

Pour avoir des cadences de tri plus élevées sur le dispositif 1, il est possible de piloter les rangées de billes de déviation 4 au plus juste et donc d'avoir des articles 10 très proches les uns des autres sur le plan support 2. Dès qu'un article 10 n'est plus en contact avec une rangée de billes de déviation 4, les actionneurs 6 de ladite rangée se remettent en position initiale ou toute autre position pour accueillir l'article 10 suivant. Le petit pas entre les différentes rangées permet ainsi de traiter des articles 10 plus proches les uns des autres dans le sens de déplacement, et donc de traiter plus d'articles dans un temps identique ou plus court.

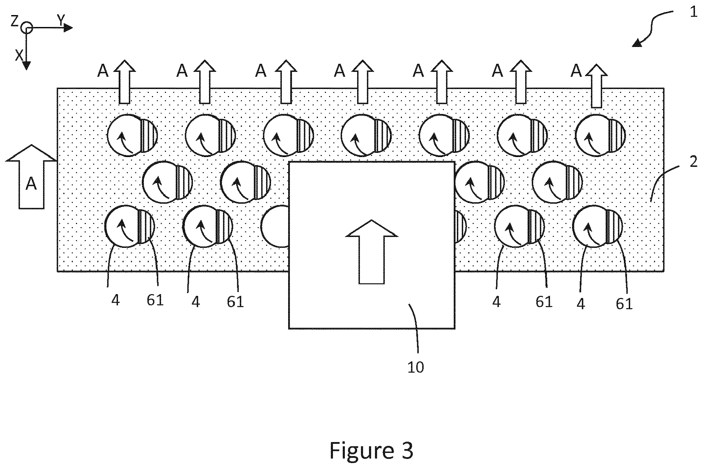

Sur les figures 3 et 6, le dispositif 1 est dans une position initiale et ne dévie pas les articles 10 qui suivent le sens de déplacement général A. Sur les figures 4 et 8, les actionneurs 6 ont orienté à +90° les arbres de rotation 7 des billes de déviation 4 de manière à dévier les articles 10 dans le sens C sur le côté gauche de la voie de transit de l'installation 100.

Lorsque les actionneurs 6 orientent les arbres de rotation 7 des billes de déviation 4 avec un angle opposé à l'illustration précédente, les articles 10 sont déviés dans le sens D sur le côté opposé, ici le droit, comme représenté sur les figures 5 et 7.

Sur la figure 6, l'axe de direction 60 est parallèle au rouleau 5. L'arbre de rotation 7, retenant la bille 4, est en position initiale ou neutre, c'est-à-dire que le plan P est perpendiculaire au support plan 2. Sur la figure 6, le plan P est parallèle à la direction normale Z. La bille de déviation 4 est en contact avec le rouleau 5 qui tourne dans le sens E autour de son axe 50. Ce contact met en rotation la bille de déviation 4 autour de son arbre de rotation 7 dans un sens B inverse du sens E. Dans cette position de l'arbre de rotation 7, la rotation de la bille 4 achemine les articles 10 sensiblement dans la direction générale A.

Pour augmenter la transmission de puissance du rouleau 5 vers la bille de déviation 4 et limiter les phénomènes de glissement, un coefficient de friction élevé existe entre ces deux éléments, avantageusement compris entre 0,3 et 0,5.

Le coefficient de friction est défini comme le rapport entre la force de glissement et la force de maintien exercées par une surface sur une autre surface avec laquelle elle est en contact. Ce coefficient représente une évaluation de la difficulté avec laquelle la surface d'un matériau glisse sur un autre matériau. Avantageusement, les billes de déviation 4 sont recouvertes d'une surface adhérisante, par exemple en caoutchouc.

Sur la figure 7, l'arbre de rotation 7 est pivoté à -90° par rapport à la position initiale. Le plan P est alors parallèle au plan support 2, i. e. au plan contenant les axes X et Y du repère de la figure 7. La bille de déviation 4 est toujours en contact avec le rouleau 5 et tourne dans le sens B opposé au sens E de rotation du rouleau 5. L'arbre de rotation 7 impose donc la rotation de la bille de déviation 4 dans la direction D. Les articles 10 en contact avec la bille de déviation 4 sont acheminés dans cette direction D.

Sur la figure 8, l'arbre de rotation 7 est pivoté à +90° par rapport à la position initiale. Le plan P est une nouvelle fois parallèle au plan support 2. Bien que le même plan que dans la figure 7, la bille 4 tourne sur son arbre de rotation 7 dans le sens figuré par une flèche. Les articles 10 sont envoyés dans la direction C lorsqu'ils sont au contact de la bille de déviation 4.

Le point de contact de la bille de déviation 4 sur le rouleau 5 est invariable quelle que soit la position de l'arbre de rotation 7, car l'axe de direction 60 de l'actionneur 6 passe par le centre de la bille 4. Pour la même raison, la bille de déviation 4 ne change pas de position par rapport à son ouverture 3 dans le plan support 2.

Selon des variantes non représentées, le centre de la bille de déviation 4 varie en position selon la direction normale Z par rapport au plan support 2. Ces variantes sont particulièrement avantageuses dans le traitement d'articles 10 de formes variées et/ou souples.

Selon un mode de réalisation de l'invention, chaque rouleau 5 est associé à une rangée de billes de déviation 4, ou deux rangées de billes de déviation 4. Par exemple, pour des rouleaux 5 au pas de 56 mm selon la direction X, on associe une rangée de billes de déviation 4 par rouleau 5 pour des charges d'articles 10 de dimensions minimales A3/A4. Et pour des rouleaux 5 au pas de 56 mm, on associe deux rangées de billes de déviation 4 par rouleau 5 pour des articles 10 de dimensions minimales A5 ou A6.

Dans une variante de réalisation de l'invention, chaque bille de déviation 4 est indépendante et peut être orientée unitairement. Cela permet de dévier les articles 10 dans deux directions différentes s'ils se présentent en même temps des deux côtés du dispositif 1 transversalement. La multitude de positions de l'arbre de rotation 7 combinée à cette configuration à l'unité permet d'obtenir une infinité d'angles de déviation et de définir les trajectoires de sortie des articles 10 du dispositif 1.

Lors de l'utilisation du dispositif 1 de déviation d'articles 10 dans une installation de tri selon l'invention, les articles 10 peuvent donc être orientés selon des caractéristiques des articles 10. On entend par caractéristiques des articles 10 leurs caractéristiques physiques (poids, taille, dimensions) ou leurs destinations. Un opérateur (non représenté) de l'installation 100 paramètre les critères de fonctionnement de son installation et donc de déviation des articles 10. Un système de contrôle (non représenté) de l'installation 100 agit sur le dispositif 1 par l'intermédiaire des actionneurs 6. Lorsque des articles 10 doivent être déviés du sens de déplacement général A vers une direction C ou D, les moyens de rotation font tourner les actionneurs 6 et inclinent le plan P de l'angle d'inclinaison β. Les arbres de rotation 7 dirigent la rotation des billes 4 dans le sens C ou D. Lors du passage des articles 10 sur les billes 4, ils sont déviés avec un angle λ par rapport au sens de déplacement général A.

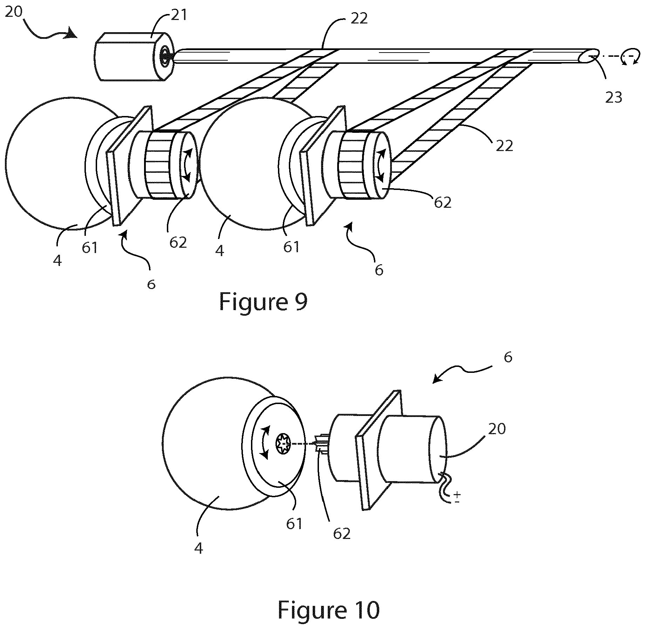

Selon une variante représentée sur la figure 9, deux des actionneurs 6 sont liés par les mêmes moyens de rotation 20. Les moyens de rotation 20 comprennent par exemple un moteur électrique 21, un arbre de transmission 23 et des courroies de transmission 22 reliées aux arbres de direction 62 des actionneurs 6. Le moteur électrique 21 permet de faire tourner l'arbre de transmission 23 autour de son axe longitudinal et ceci préférentiellement dans les deux sens de rotation. Les courroies 22 transmettent cette rotation aux arbres de direction 62 pour orienter les axes de rotation 70 des deux billes 4 dans la même position désirée. Ceci permet de coupler mécaniquement plusieurs actionneurs 6 pour obtenir une même orientation des arbres de rotation 7 correspondants, c'est-à-dire pour paralléliser les axe de rotation 70

Selon une autre variante illustrée sur la figure 10, chaque actionneur 6 intègre les moyens de rotation 20 actionnant l'arbre de direction 62, qui comprennent par exemple un moteur électrique, ou un mécanisme électromagnétique.

Selon une autre variante (non représentée), les moyens de rotation comprennent un système à crémaillère utilisant un moteur rotatif muni d'un engrenage, qui met en mouvement longitudinal une crémaillère. Les actionneurs 6 sont aussi équipés d'une roue d'engrenage liée à l'arbre de direction 62, mise en rotation par la crémaillère qui coulisse longitudinalement. Alternativement, le moteur rotatif est remplacé par un actionneur linéaire comme un vérin ou un moteur linéaire, pour mettre en mouvement la crémaillère.

Selon une autre variante (non représentée), les moyens de rotation comprennent des systèmes bielle-manivelle. Un axe est mis en rotation par un moteur ou un autre actionneur rotatif. Une ou des manivelles fixées sur l'axe mettent en mouvement les arbres de direction 62 des actionneurs 6 par l'intermédiaire de bielles.

Ainsi, dans les trois variantes décrites immédiatement ci-dessus, les actionneurs 6 sont donc aptes à déplacer l'axe de rotation 70 de la bille 4 en rotation autour de l'axe de direction 60, sans que l'actionneur 6 lui-même soit mobile en rotation autour de l'axe de direction 60.

## Revendications

1. Dispositif (1) de déviation d'articles (10) par rapport à un sens de déplacement général (A) des articles (10) comprenant :
- un plan support (2) définissant une pluralité d'ouvertures (3),
- une pluralité de billes de déviation (4), chaque bille de déviation (4) étant disposée dans l'une des ouvertures (3) et montée rotative par rapport au plan support (2) autour d'un axe de rotation (70),
- au moins un rouleau (5) disposé sous le plan support (2) pour entraîner les billes de déviation (4), le rouleau (5) s'étendant selon une direction transversale (Y) sensiblement parallèle au plan support (2) et sensiblement perpendiculaire au sens de déplacement général (A) des articles (10), et
- une pluralité d'actionneurs (6), chaque actionneur (6) étant adapté pour déplacer sélectivement l'axe de rotation (70) d'une des billes de déviation (4) en rotation autour d'un axe de direction (60) par rapport au plan support (2) entre une pluralité de positions,
**caractérisé en ce que** l'axe de direction (60) passe par le centre de la bille de déviation (4) et forme un angle aigu (α) avec l'axe de rotation (70), l'axe de rotation (70) et l'axe de direction (60) définissant un plan (P) formant un angle d'inclinaison avec une direction normale (Z) au plan support (2), la pluralité de positions de l'axe de rotation (70) définissant une pluralité de valeurs possibles pour l'angle d'inclinaison (β).

2. Dispositif (1) selon la revendication 1, **caractérisé en ce que** chaque actionneur (6) comporte un arbre de rotation (7) s'étendant selon l'axe de rotation (70), chaque bille de déviation (4) étant montée rotative respectivement autour de l'un des arbres de rotation (7) par rapport au plan support (2).

3. Dispositif (1) selon la revendication 2, **caractérisé en ce que** chaque organe actionneur (6) comprend une coupelle (61), et un arbre de direction (62) fixé sur la coupelle (61), l'arbre de direction (62) s'étendant selon l'axe de direction (60) et étant monté rotatif par rapport au plan support (2) autour de l'axe de direction (60), l'arbre de rotation (7) dudit actionneur (6) étant fixé sur la coupelle (61).

4. Dispositif (1) selon l'une quelconque des revendications 1 à 3, **caractérisé en ce que** l'axe de direction (60) de chaque actionneur (6) est sensiblement parallèle au rouleau (5).

5. Dispositif (1) selon l'une quelconque des revendications 1 à 4, **caractérisé en ce que** l'angle aigu (α) est compris entre 30° et 60° inclus, et vaut de manière préférée environ 45°.

6. Dispositif (1) selon l'une quelconque des revendications 1 à 5, **caractérisé en ce que** chaque actionneur (6) est adapté pour que les valeurs possibles de l'angle d'inclinaison (β) s'étendent entre +90° et -90°, l'angle d'inclinaison (β) étant orienté autour de l'axe de direction (60) par rapport à la direction normale (Z).

7. Dispositif (1) selon l'une quelconque des revendications 1 à 6, **caractérisé en ce que** l'actionneur (6) est entraîné en rotation autour de l'axe de direction (60) par un actionneur mécanique ou électromagnétique.

8. Dispositif (1) selon l'une des revendications précédentes, **caractérisé en ce que** les billes de déviation (4) possèdent un coefficient de friction sur le rouleau (5) supérieur ou égal à 0,3, et inférieur ou égal à 0,5.

9. Installation (100) de tri d'articles (10), **caractérisé en ce qu'**elle comprend au moins un dispositif (1) selon l'une quelconque des revendications 1 à 8.

10. Procédé de déviation d'articles (10) mettant en œuvre un dispositif (1) de déviation d'articles (10) selon l'une quelconque des revendications 1 à 8, ledit procédé comprenant au moins les étapes suivantes :
- mise en rotation du rouleau (5) autour de son axe (50) par rapport au plan support (2) pour entraîner billes de déviation (4) en rotation autour de l'axe de rotation (70), l'une des billes de déviation (4) supportant au moins l'un des articles (10), et
- rotation d'au moins l'un des actionneurs (6) autour de l'axe de direction (60) pour sélectionner une valeur de l'angle d'inclinaison (β) et dévier ledit article dans un sens (C, D) différent du sens de déplacement général (A).

## Patentansprüche

1. Vorrichtung (1) zum Ablenken von Gegenständen (10) in Bezug auf eine allgemeine Bewegungsrichtung (A) der Gegenstände (10), umfassend :
- eine Trägerebene (2), die eine Vielzahl von Öffnungen (3) definiert,
- eine Vielzahl von Ablenkkugeln (4), wobei jede Ablenkkugel (4) in einer der Öffnungen (3) angeordnet und in Bezug auf die Trägerebene (2) um eine Drehachse (70) drehbar gelagert ist,
- mindestens eine Rolle (5), die unter der Trägerebene (2) angeordnet ist, um die Ablenkkugeln (4) anzutreiben, wobei sich die Rolle (5) in einer Querrichtung (Y) erstreckt, die im Wesentlichen parallel zur Trägerebene (2) und im Wesentlichen senkrecht zur allgemeinen Bewegungsrichtung (A) der Gegenstände (10) verläuft, und
- eine Vielzahl von Stellgliedern (6), wobei jedes Stellglied (6) dazu angepasst ist, die Drehachse (70) einer der Ablenkkugeln (4) selektiv in Drehung um eine Richtungsachse (60) in Bezug auf die Trägerebene (2) zwischen einer Vielzahl von Positionen zu bewegen, **dadurch gekennzeichnet, dass** die Richtungsachse (60) durch den Mittelpunkt der Ablenkkugel (4) verläuft und einen spitzen Winkel (α) mit der Drehachse (70) bildet, wobei die Drehachse (70) und die Richtungsachse (60) eine Ebene (P) definieren, die einen Neigungswinkel (β) mit einer Richtung (Z) senkrecht zur Trägerebene (2) bildet, wobei die Vielzahl von Positionen der Drehachse (70) eine Vielzahl von möglichen Werten für den Neigungswinkel (β) definieren.

2. Vorrichtung (1) nach Anspruch 1, **dadurch gekennzeichnet, dass** jedes Stellglied (6) eine Drehwelle (7) aufweist, die sich entlang der Drehachse (70) erstreckt, wobei jede Ablenkkugel (4) jeweils um eine der Drehwellen (7) in Bezug auf die Trägerebene (2) drehbar gelagert ist.

3. Vorrichtung (1) nach Anspruch 2, **dadurch gekennzeichnet, dass** jedes Stellgliedorgan (6) eine Schale (61) und eine an der Schale (61) befestigte Lenkwelle (62) umfasst, wobei sich die Lenkwelle (62) entlang der Lenkachse (60) erstreckt und in Bezug auf die Trägerebene (2) um die Lenkachse (60) drehbar gelagert ist, wobei die Drehwelle (7) des Stellglieds (6) an der Schale (61) befestigt ist.

4. Vorrichtung (1) nach einem der Ansprüche 1 bis 3, **dadurch gekennzeichnet, dass** die Lenkachse (60) jedes Stellglieds (6) im Wesentlichen parallel zur Rolle (5) verläuft.

5. Vorrichtung (1) nach einem der Ansprüche 1 bis 4, **dadurch gekennzeichnet, dass** der spitze Winkel (α) zwischen einschließlich 30° und 60° liegt und vorzugsweise etwa 45° beträgt.

6. Vorrichtung (1) nach einem der Ansprüche 1 bis 5, **dadurch gekennzeichnet, dass** jedes Stellglied (6) so angepasst ist, dass sich die möglichen Werte des Neigungswinkels (β) zwischen +90° und -90° erstrecken, wobei der Neigungswinkel (β) um die Lenkachse (60) in Bezug auf die Normalenrichtung (Z) ausgerichtet ist.

7. Vorrichtung (1) nach einem der Ansprüche 1 bis 6, **dadurch gekennzeichnet, dass** das Stellglied (6) durch ein mechanisches oder elektromagnetisches Stellglied um die Lenkachse (60) in Drehung angetrieben wird.

8. Vorrichtung (1) nach einem der vorstehenden Ansprüche, **dadurch gekennzeichnet, dass** die Ablenkkugeln (4) einen Reibungskoeffizienten auf der Rolle (5) von größer oder gleich 0,3 und kleiner oder gleich 0,5 besitzen.

9. Anlage (100) zum Sortieren von Gegenständen (10), **dadurch gekennzeichnet, dass** sie mindestens eine Vorrichtung (1) nach einem der Ansprüche 1 bis 8 umfasst.

10. Verfahren zum Ablenken von Gegenständen (10) unter Verwendung einer Vorrichtung (1) zum Ablenken von Gegenständen (10) nach einem der Ansprüche 1 bis 8, wobei das Verfahren mindestens die folgenden Schritte umfasst:
- in Drehung Versetzen der Rolle (5) um ihre Achse (50) in Bezug auf die Trägerebene (2), um Ablenkkugeln (4) in Drehung um die Drehachse (70) anzutreiben, wobei eine der Ablenkkugeln (4) mindestens einen der Gegenstände (10) trägt, und
- Drehen von mindestens einem der Stellglieder (6) um die Lenkachse (60), um einen Wert des Neigungswinkels (β) auszuwählen und den Gegenstand in eine Richtung (C, D) abzulenken, die sich von der allgemeinen Bewegungsrichtung (A) unterscheidet.

## Claims

1. A device (1) for diverting items (10) with respect to an overall direction of travel (A) of the items (10), comprising:
- a support plane (2) defining a plurality of openings (3),
- a plurality of diverting balls (4), each diverting ball (4) being arranged in one of the openings (3) and mounted with the ability to rotate with respect to the support plane (2) about an axis of rotation (70),
- at least one roller (5) arranged underneath the support plane (2) for driving the diverting balls (4), the roller (5) extending in a transverse direction (Y) substantially parallel to the support plane (2) and substantially perpendicular to the overall direction of travel (A) of the items (10), and
- a plurality of actuators (6), each actuator (6) being suitable for selectively moving the axis of rotation (70) of one of the diverting balls (4) in rotation about an axis of direction (60) with respect to the support plane (2) between a plurality of positions, **characterized in that** the axis of direction (60) passes through the center of the diverting ball (4) and forms an acute angle (α) with the axis of rotation (70), the axis of rotation (70) and the axis of direction (60) defining a plane (P) forming an angle of inclination (β) with a direction normal (Z) to the support plane (2), the plurality of positions of the axis of rotation (70) defining a plurality of possible values for the angle of inclination (β).

2. The device (1) according to claim 1, **characterized in that** each actuator (6) comprises a rotary shaft (7) extending along the axis of rotation (70), each diverting ball (4) being mounted so as to rotate respectively about one of the rotary shafts (7) with respect to the support plane (2).

3. The device (1) according to claim 2, **characterized in that** each actuating member (6) comprises a base plate (61), and a directional shaft (62) attached to the base plate (61), the directional shaft (62) extending along the axis of direction (60) and being mounted so as to rotate with respect to the support plane (2) about the axis of direction (60), the rotary shaft (7) of said actuator (6) being attached to the base plate (61).

4. The device (1) according to any one of claims 1 to 3, **characterized in that** the axis of direction (60) of each actuator (6) is substantially parallel to the roller (5).

5. The device (1) according to any one of claims 1 to 4, **characterized in that** the acute angle (α) is between 30° and 60° inclusive, and is preferably about 45°.

6. The device (1) according to any one of claims 1 to 5, **characterized in that** each actuator (6) is suitable for the possible values of the angle of inclination (β) to extend between +90° and -90°, the angle of inclination (β) being oriented about the axis of direction (60) with respect to the normal direction (Z).

7. The device (1) according to any one of claims 1 to 6, **characterized in that** the actuator (6) is driven in rotation about the axis of direction (60) by a mechanical or electromagnetic actuator.

8. The device (1) according to one of the preceding claims, **characterized in that** the diverting balls (4) have a coefficient of friction on the roller (5) of greater than or equal to 0.3 and less than or equal to 0.5.

9. An installation (100) for sorting items (10), **characterized in that** it comprises at least one device according to any one of claims 1 to 8.

10. A method for diverting items (10) implementing a device (1) for diverting items (10) according to any one of claims 1 to 8, said method comprising at least the following steps:
- rotating the roller (5) about its axis (50) with respect to the support plane (2) in order to drive diverting balls (4) in rotation about the axis of rotation (70), one of the diverting balls (4) supporting at least one of the items (10), and
- rotating at least one of the actuators (6) about the axis of direction (60) in order to select a value of the angle of inclination (β) and to divert said item in a direction (C, D) which is different from the overall direction of travel (A).
